# EUROPÄISCHE PATENTSCHRIFT

(11) **EP 1 381 935 B1**
(45) Veröffentlichungstag und Bekanntmachung des Hinweises auf die Patenterteilung: **07.06.2006**
(21) Anmeldenummer: 02732661.0
(22) Anmeldetag: 24.04.2002
(51) Int. Cl.: G06F 3/12

(54) **VERFAHREN, WARTUNGSCOMPUTER UND COMPUTERPROGRAMMPRODUKT FÜR DIE WARTUNG EINES DRUCK- ODER KOPIERSYSTEMS**
METHOD, MAINTENANCE COMPUTER AND COMPUTER PROGRAM PRODUCT FOR CARRYING OUT MAINTENANCE ON A PRINTING OR COPYING SYSTEM
PROCEDE, ORDINATEUR DE MAINTENANCE ET PRODUIT DE PROGRAMME D'ORDINATEUR POUR EFFECTUER LA MAINTENANCE D'UN SYSTEME D'IMPRESSION OU DE REPRODUCTION

(30) Priorität: 27.04.2001 DE 10120719; 20.09.2001 DE 10146378
(43) Veröffentlichungstag der Anmeldung: 21.01.2004
(73) Patentinhaber: Océ Printing Systems GmbH, 85586 Poing (DE)
(72) Erfinder: KATHAN, Berthold, 81735 München (DE); BRAUN, Peter, 84453 Mühldorf (DE); SCHMIDT-BEHOUNEK, Thomas, 85560 Ebersberg (DE)
(74) Vertreter: Schaumburg, Thoenes, Thurn, Landskron
(86) Internationale Anmeldenummer: PCT/EP2002/004541
(87) Internationale Veröffentlichungsnummer: WO 2002/088923

(56) Entgegenhaltungen:
- DE-A- 19 853 654
- PATENT ABSTRACTS OF JAPAN vol. 2000, no. 08, 6. Oktober 2000 (2000-10-06) & JP 2000 148430 A (NEC ENG LTD), 30. Mai 2000 (2000-05-30)

## Beschreibung

Die Erfindung betrifft ein verfahren, einen Wartungscomputer und ein Computerprogrammprodukt für die Wartung eines Druck- oder Kopiersystems.

Die Erfindung betrifft insbesondere solche Druck- oder Kopiersysteme, die mindestens zwei Systemcomputer aufweisen, nämlich einen zentralen Gerätesteuerungscomputer, der eine Vielzahl von Aggregaten ansteuert und einen mit dem Gerätesteuerungscomputer verbundenen Raster-Prozessor-Computer, der einen Druckdaten-Netzwerkanschluß für eingehende, zu rasternde Druck- oder Kopierdaten enthält.

Ein derartiges Druck- oder Kopiersystem ist beispielsweise in der WO 98/49606 A1 beschrieben. Ein Rasterprozessor für einen derartigen, elektrophotographischen Drucker ist beispielsweise aus der US-A-5,012,434 bekannt.

Die einzelnen Computer derartiger, mehrere Systemcomputer enthaltende Gerätesysteme weisen nicht immer Ein-und Ausgabemittel wie Tastaturen, Bildschirme etc. auf. Zur Wartung derartiger Systeme ist es deshalb in der Regel erforderlich, mit einem speziell dafür eingerichteten Wartungs-computer an das System bzw. einen einzelnen Systemcomputer anzudocken, um Wartungsmaßnahmen vornehmen zu können. Dabei besteht jedoch mitunter das Problem, daß der zu wartende Computer bereits in seinen Grundfunktionen eine Störung aufweist, und somit die Zugänglichkeit zum System erschwert oder gar unmöglich ist. Bei Computersystemen, deren Betriebssystem-Dateien auf einer Festplatte gespeichert sind, tritt mitunter das Problem auf, daß die Festplatte defekt ist und somit nicht einmal die grundsätzlichen Betriebssystem-Funktionen zur Verfügung stehen. In dieser Situation muß der Rechner heutzutage meist über eine Systemdiskette oder eine System CD-ROM neu gebootet, d.h. mit Betriebssystemdaten geladen werden.

In der Veröffentlichung "Preboot Execution Environment (PXE) Specification" der Intel Corporation, Vers. 2.1 (September 20, 1999) sind typische Systemstrukturen und Vorgänge im Zusammenhang mit dem Booten eines Computers beschrieben.

Unter der Internet-Adresse http://cgi.tu-chemnitz.de/ftp-home/pub/documents/rfc/rfc1350.txt ist das vom Massachusetts Institute of Technology für die Network Working Group erarbeitete und von K. Sollins im Juli 1992 herausgegebene Dokument mit dem Titel "THE TFTP PROTOCOL (REVISION 2) veröffentlicht. Es trägt die Dokument-Nummer Request for Comments (RFC) Nr. 1350 sowie die Kennungen STD 33, Obsoletes RFC 783. In diesem Dokument sind technische Details des in Internet-Systemen etablierten TFT-Protokolls beschrieben.

Unter der Internet-Adresse http://cgi.tu-chemnitz.de/ftp-home/pub/documents/rfc/rfc1542.txt ist das von der Carnegie Mellon University für die Network Working Group erarbeitete und von M. Wimer im Oktober 1993 herausgegebene Dokument mit dem Titel "Clarifications and Extensions for the Bootstrap Protocol" veröffentlicht. Es trägt die Dokument-Nummern Request for Comments (RFC) Nr. 1542 sowie die Kennungen Updates 951 und Obsoletes 1532. In diesem Dokument sind technische Details des in Internet-Systemen etablierten Bootstrap-Protokolls beschrieben.

Aus der DE 198 53 654 A ist ein Bilderzeugungs-Managementsystem bekannt, das eine Anzahl von Bilderzeugungsvorrichtungen, eine zentrale Servicestation, die einen Wartungsservice für die Bilderzeugungsvorrichtungen bereitstellt sowie eine Kommunikationssteuereinheit beinhaltet.

Aus den Patent Abstracts of Japan, Vol. 2000, No. 08, 6.10.2000 bzw. der JP 2000-148430 A ist ein Drucker-Managementsystem bekannt.

Es ist Aufgabe der Erfindung, Service-Einsätze an Druck- oder Kopiersystemen mit mehreren Systemcomputern zu erleichtern.

Diese Erfindung wird mit den in den unabhängigen Ansprüchen angegebenen Merkmalen gelöst. Vorteilhafte Ausführungsformen der Erfindung sind in den Unteransprüchen angegeben.

Erfindungsgemäß wird an einem Druck- oder Kopiersystem, das mindestens zwei Systemcomputer aufweist, von denen einer als Service-Verbindungscomputer mit einem Wartungsdatenanschluß ausgebildet ist, über den Wartungsdatenanschluß mit einem Wartungscomputer verbunden. Dabei wird zunächst der Wartungscomputer an den ausgeschalteten Service - Verbindungscomputer angeschlossen und erst danach der Service-Verbindungscomputer eingeschaltet. Im Zuge der Einschaltprozedur wird zwischen dem Service-Verbindungscomputer und dem Wartungscomputer eine Netzwerkverbindung hergestellt, durch die zumindest ein mimimaler Datenaustausch, insbesondere mit einem Basis-Eingangs/Ausgangs-System, möglich ist. Weiterhin überprüft insbesondere das Basis-Eingangs/Ausgangs-System der Reihe nach, ob an verschiedenen Schnittstellen des Verbindungscomputers Betriebssystemdaten zur Verfügung stehen und lädt diese gegebenenfalls von der ersten, Betriebsdaten enthaltenden Schnittstelle in den Service-Verbindungscomputer. Die Reihenfolge der Überprüfung der Schnittstellen ist insbesondere so gewählt, daß die Überprüfung des Wartungsdatenanschlusses vor der Überprüfung eines Festplatten-Anschlusses erfolgt. Durch diese Bevorzugung des Wartungsdatenanschlusses gegenüber den anderen Datenanschlüssen, insbesondere dem Festplatten-Anschluß, wird bewirkt, daß fehlerhafte Daten von der Festplatte nicht in den Arbeitsspeicher des Service-Verbindungscomputers gelangen. Fehlerhafte Boot-Vorgänge und damit etwaige verbundene Zeitverluste im Wartungsvorgang werden dadurch vermieden.

Die Überprüfungsreihenfolge für die verschiedenen Schnittstellen (Wartungsdatenanschluß, andere Netzwerkverbindungen, CD-ROM, Diskettenlaufwerk, Festplattenlaufwerk, SCSI-Anschluß) kann insbesondere mit mechanischen, elektronischen und/oder programmgesteuerten Schaltern am Service-Verbindungscomputer ausgewählt werden, wodurch zwei verschiedene Startbetriebsarten des Service-Verbindungscomputers geschaffen werden. Besonders vorteilhaft ist dabei das mechanische Umstellen der Überprüfungsreihenfolge dahingehend, daß der Wartungsdatenanschluß vor der Überprüfung des Festplattenanschlusses erfolgt. Durch eine solche mechanische Umschaltung kann gewährleistet werden, daß ein elektronisch oder programmsteuerungsseitig unzugänglicher Rechner in jedem Fall auf sichere Art und Weise extern von dem Service-Wartungscomputer mit Betriebssystemdaten versorgt und damit bootbar ist.

Als Wartungscomputer kann insbesondere ein mobiler Computer eingesetzt werden. Dies ist vor allem dann von Vorteil, wenn vor Ort am Druckgerät Bauteile wie beispielsweise eine Festplatte getauscht werden und im Anschluß daran neue Steuerungsprogramme zu diesem getauschten Bauteil in das Drucksystem eingespielt werden müssen. Dabei ist es vorteilhaft, daß mit dem Wartungscomputer automatisch überprüft wird, ob sich ein vorgegebenes Bauteil in einem vorgegebenen Zustand befindet. Je nach Überprüfungsergebnis kann dann entweder das Bauteil, soweit dieses selbst einstellbar ist und/oder Steuerungsprogramme für das Bauteil mit Hilfe vorgegebener, im Wartungscomputer verfügbarer Steuerungsprogramme neu eingerichtet werden. Insbesondere kann vorgesehen sein, eine mit Störung behaftete oder neue Festplatte neu zu formatieren, zu partitionieren und/oder neue Standard-Betriebssystemprogramme auf diese aufzuspielen, wodurch der Systemcomputer vollständig neu eingerichtet und konfiguriert wird. Zusätzlich können weitere, für das Druckgerät spezifische, vordefinierte Steuerungs- und/oder Konfigurationsdateien in das Drucksystem eingespielt werden. Alle Abläufe können weitgehend automatisiert erfolgen, indem auf dem Wartungscomputer entsprechende, vorgegebene Installations- bzw. Service-Steuerungsprogramme, sogenannte Batch-Programme und/oder Makros, ablaufen. Diese Programme können im Servicecomputer wahlweise auf einer Festplatte gespeichert oder auf einem übertragbaren Speicher wie Floppy Discs oder CD-ROM enthalten sein. Im Zuge des Neueinspielens von Daten auf das Drucksystem können Daten sowohl für den Serviceverbindungscomputer als auch für weitere, innerhalb des Drucksystems angeschlossene Computer eingespielt werden.

Die Datenverbindung zwischen dem Wartungscomputer und dem Service-Verbindungscomputer wird insbesondere als direkte, individuelle Punkt-zu-Punkt-Verbindung hergestellt, bei der kein weiterer Computer an der Verbindungsleitung angeschlossen ist, wodurch eine hohe Übertragungssicherheit entsteht. Dadurch werden eindeutige Übertragungswege geschaffen, und es können keine Verwechslungen mit anderen, am Netzwerk angeschlossenen Computern, z.B. durch Doppelbelegung von IP-Adressen, erfolgen. Es ist jedoch auch denkbar, die Verbindung zwischen dem Wartungscomputer und dem Service-Verbindungscomputer über eine Datenfernverbindung zu initieren und/oder das Einschalten des Service-Verbindungscomputers per Fernsteuerung durch eine sogenannte wake-on-LAN- Funktion über die Datenfernverbindung zu bewirken.

In einem mehrere Systemcomputer umfassenden Drucksystem, bei dem die Systemcomputer sequentiell eingeschalten werden, wird insbesondere der erste einzuschaltende Systemcomputer als Service-Verbindungscomputer eingesetzt.

Nachfolgend werden Ausführungsbeispiele der Erfindung beschrieben, anhand derer weitere Vorteile und Wirkungen der Erfindung deutlich werden.

Es zeigen:
- Figur 1:: verschiedene Systemcomputer eines Drucksystems
- Figur 2:: Details eines Rasterprozesscomputers in einem Druckgerät
- Figur 3:: ein Ablaufdiagramm für einen Service-Einsatz
- Figur 4:: ein Hauptmenü für ein Drucker-Serviceprogramm
- Figur 5:: ein Untermenü für ein Drucker-Serviceprogramm
- Figur 6:: ein Anzeigefenster für Installationsdateien und
- Figur 7:: ein Anzeigefenster zur Verfolgung von Boot-Ereignissen

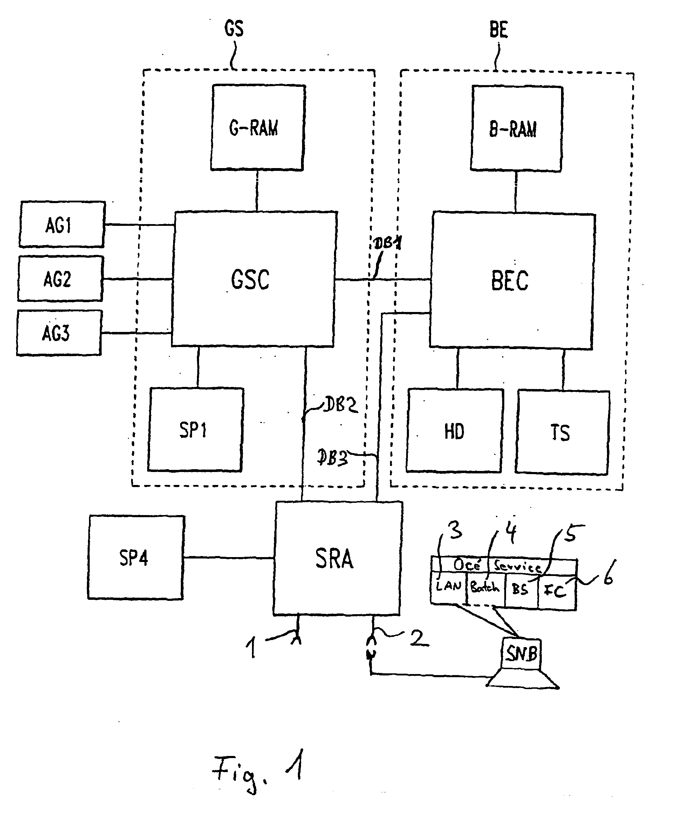

Figur 1 zeigt elektronische Komponenten eines Drucksystems. Ein Controller GSC einer Gerätesteuerung GS ist mit verschiedenen, elektronischen Aggregatsteuerungen AG1, AG2 und AG3 verbunden, welche jeweils die verschiedenen Aggregate des Druckers ansteuern. Der Controller GSC ist mit dem Bedienfeldcontroller BEC eines Bedienfeldcomputers BE verbunden, der als vollständiger Computer mit Festplatte HD, Touch Screen-Anzeige -und Eingabeeinheit TS und einem Mikroprozessor im Bedienfeldcomputer BDC ausgebildet ist.

Das Drucksystem weist zudem einen Rasterprozessorcomputer SRA (scalable raster architecture) auf, der Druckdaten in einer höheren Druckdatensprache wie PCL (printer control language), PostScript oder AFP (advanced function presentation) empfängt, die Druckdaten rastert und die gerasterten Daten an die weiteren Systemcontroller des Computers zum Erzeugen des Ausdrucks sendet. Der Rasterprozessorcomputer SRA empfängt die Druckdaten über eine Schnittstelle 1, die für Punkt- zu Punkt- Verbindung, für lokale Netzwerkverbindungen (LAN), für die ca. im Jahre 1970 durch die Firma International Business machines Corp. (IBM) eingeführte System/370-Kanalverbindung (S/370), für eine Small Computer System Interface (SCSI) Verbindung und/oder für weltweite Netzwerkverbindungen, beispielsweise als Internet-Verbindung, eingerichtet sein kann.

Des weiteren enthält der Rasterprozessor-Computer SRA eine zweite Schnittstelle 2, mit der eine zweite Netzwerkverbindung, ebenfalls als Punkt- zu Punkt- Verbindung, als lokale Netzwerkverbindungen (LAN) und/oder als weltweite Netzwerkverbindung, beispielsweise als Internet-Verbindung, hergestellt werden kann.

Bei dem in Figur 1 gezeigten Beispiel ist an der zweiten (LAN2)-Netzwerkverbindung 2 eine Punkt-zu-Punkt Verbindung zu einem mobilen Service-Computer SNB (Service Note Book, Laptop) hergestellt. Auf dem Service-Computer SNB ist eine Anzahl von Steuerungsprogrammen geladen bzw. gespeichert:
- Mit einer ersten Steuerungsprogrammgruppe 3 wird die Netzwerk-Verbindung (Punkt-Zu-Punkt) zum Rasterprozessor-Computer SRA aufgebaut.
- In einer zweiten Steuerungsprogrammgruppe 4 sind diverse automatisierte, service-spezifische Programmabläufe gespeichert (Batch-Programme und/oder Makros), durch die verschiedene servicerelevante Vorgänge weitgehend automatisiert sind. Hierzu zählen z.B. das Löschen, Formatieren und/oder Partitionieren einer Festplatte des Rasterprozess-Controllers SRA oder eines der anderen Computer GS oder BE. Auch Transfers von Betriebssystemdateien, von Dateien zur Steuerung des Rasterprozesses (functional code) und/oder des Basis-Gerätecontrollers GSC (Aggregatecodes) vom Service-Computer SNB an den Service-Verbindungscomputer, welcher bei dem in Figur 1 gezeigten Fall der Rasterprozesscomputer SRA ist, können mit den Programmen 4 gesteuert werden.
- In der dritten Steuerungsprogrammgruppe 5 (BS) sind Betriebssystemdaten enthalten, die druckerspezifische Parameter enthalten und die dazu vorbereitet sind, in einen der Drucksystemcomputer GE, BE, SRA, insbesondere in letzteren, geladen zu werden.
- In der vierten Steuerungsprogrammgruppe 6 (FC) sind druckerspezifische Steuerungsprogramme enthalten, beispielsweise der oben genannte functional code für den Rasterpropzessor-Computer und/oder Aggregatesteuerungsprogramme für die Gerätesteuerung GS.

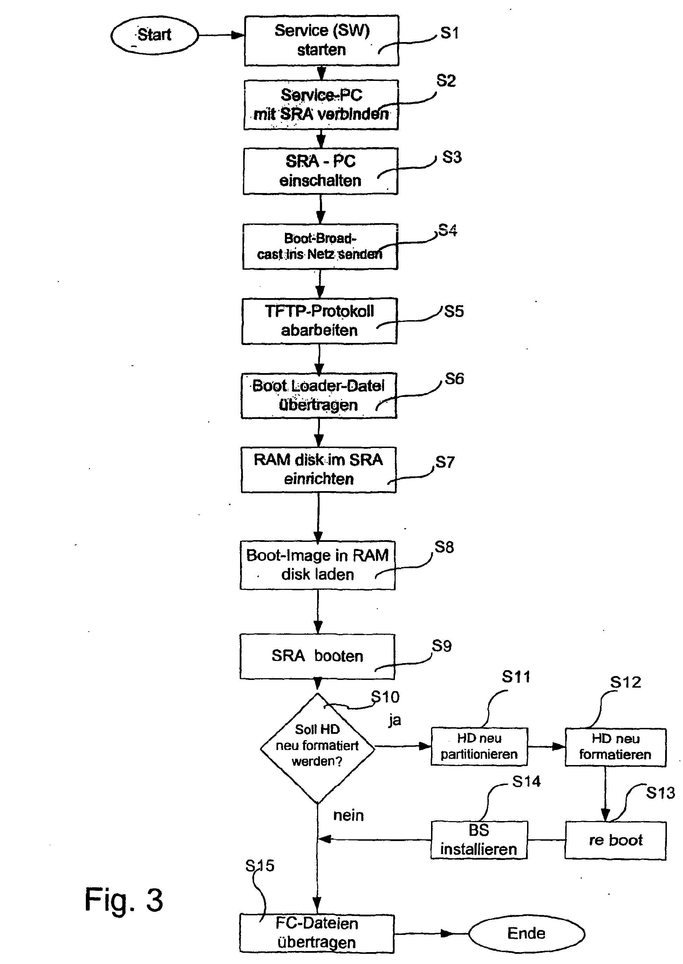

Beim Einschalten des Druckgeräts wird zunächst der Rasterprozessor SRA gestartet, dann die Gerätesteuerung GS und zuletzt der Bedienfeldcomputer BE. Dabei steuert jeweils ein zuvor eingeschalteter Systemcomputer den Anschaltvorgang des nächsten Systemcomputers, zumindest über eine Statusmeldung "boot o.k." an eine Einschaltsteuerungsprozedur. Die Abläufe beim Einschalten des Rasterprozessor-Computers SRA werden später anhand der Figur 3 genauer erläutert, deshalb werden nachfolgend zunächst die Einschaltvorgänge der Gerätesteuerungs- und Bedienfeldcomputer GS, BE beschrieben:

Nach dem Starten des Gerätesteuerungs-Computers GS wird in dessen Arbeitsspeicher G-RAM ein Software-Programm geladen. Das Software-Programm wird normalerweise aus einem nicht flüchtigen Speicher SP1 des Gerätesteuerungs-Computers GS kopiert. Dieses Programm steuert die weiteren Abläufe der Gerätesteuerung. Der Speicher SP 1 kann ein nicht flüchtiges RAM (sog. non-volatile RAM bzw. NV-RAM), ein E-EPROM oder auch ein Festplattenspeicher sein.

Während oder nach dem Laden des Arbeitsprogramms in den Arbeitsspeicher G-RAM wird vom Controller GSC der Gerätesteuerung GS die Bedienfeldeinheit BE aktiviert. Dazu wird ein Bedienfeld-Softwareprogramm in den Arbeitsspeicher B-RAM der Bedienfeldeinheit BE geladen. Dieses aktiviert wiederum den Touch-Screen TS. Ein Controller BEC der Bedienfeldeinheit BE überwacht die Abläufe innerhalb der Bedienfeldeinheit BE.

Die Datenübertragung zwischen der Gerätesteuerung GS und der Bedienfeldeinheit BE erfolgt über einen Datenbus DB 1, an dem die beiden Controller GSC und BEC angeschlossen sind. Weitere Verbindungen DB 2 existieren zwischen der Gerätesteuerung GS und dem Rasterprozessorsystem SRA sowie DB 3 zwischen dem Rasterprozessorsystem SRA und dem Bedienfeldcomputer. Die Verbindungen DB1, DB2 und DB3 können dabei wahlweise als Punkt- zu Punkt- Verbindungen ausgebildet sein oder auch als Bussystem.

Zum Einschalten des Druckgeräts werden die drei Systemcomputer SRA, GS und BE der Reihe nach eingeschaltet. Als erster Computer wird dabei der Rasterprozesscomputer SRA gestartet, dann der Gerätesteuerungscomputer GS und zuletzt der Bedienfeldcomputer BE. Da der Rasterprozesscomputer SRA der erste zu startende Systemcomputer ist, ist bei einer Störung von dessen Einschalt- bzw. Bootvorgang der gesamte Drucker außer Funktion. Der Rasterprozessor-Computer SRA wird deshalb als Service-Verbindungscomputer eingesetzt.

Im Zuge des Starts der Gerätesteuerung, bei dem das Arbeitsprogramm der Gerätesteuerung GS in den Arbeitsspeicher G-RAM geladen wird, werden auch diejenigen Steuerungsdaten in den Arbeitsspeicher G-RAM geladen, die benötigt werden, um die verschiedenen Aggregatsteuerungen (AG1, AG2 usw.) anzusteuern. Diese Steuerungsdaten werden aus dem Speicher SP1 entnommen. Im Zuge des Starts der Bedienfeldeinheit BE werden die Steuerungsdaten dann vom Arbeitsspeicher G-RAM der Gerätesteuerung GS an den Arbeitsspeicher B-RAM der Bedienfeldeinheit BE übertragen. Die Bedienfeldeinheit BE überprüft anschließend, ob diese Daten jeweils in einem zugelassenen Wertebereich liegen. Dazu entnimmt sie Vergleichswerte aus dem Speicher ST3. Die Vergleichswerte sind dabei Grenzwerte von zulässigen Wertebereichen in den jeweiligen Steuerungsdaten. Stellt nun die Bedienfeldeinheit BE fest, daß ein aus dem Speicher SP1 stammendes Steuerungsdatum außerhalb eines für dieses Datum zulässigen Wertebereiches liegt, dann erzeugt die Bedienfeldeinheit BE ein Fehlersignal. Daraufhin wird versucht, die Daten anhand von Vorgabewerten (default) aus dem Speicher ST2 zu ersetzen und die ersetzten Daten an den Arbeitsspeicher G-RAM der Gerätesteuerung GS zurückzugeben.

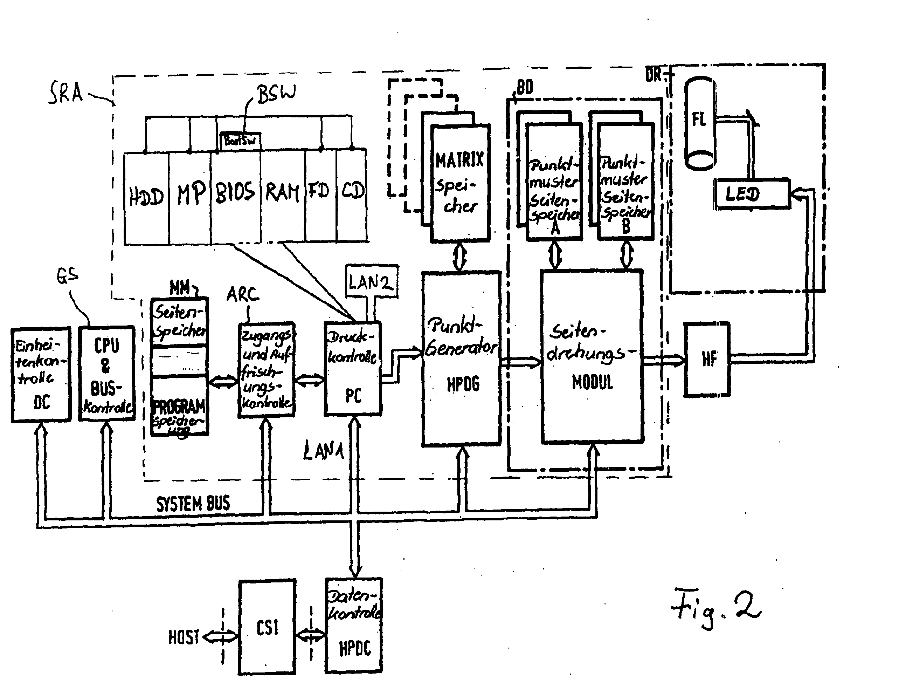

In Figur 2 sind nochmals wesentliche Komponenten eines Druckgeräts dargestellt. Druckdaten werden dabei von einem Host-System per direkter Punkt-zu-Punkt Verbindung oder über ein Netzwerk an ein Kanalsystem-Interface CSI übertragen. Von dort wird es über eine Datenkontrolleinheit HPDC an einen Systembus übertragen, der die Daten an den SRA-Controller weiterleitet. Innerhalb des SRA-Controllers werden die Daten in einem Hauptspeicher MM zwischengespeichert und durch eine Kontrolleinheit ARC gesteuert an einen Rasterprozessor HPDG übertragen, der die gerasterten Daten in Bitmap-Speichern MXM zwischenspeichert, Bei Bedarf können die gerasterten Bilddaten mittels Zwischenspeichern A, B in einem Rotationsmodul BD gedreht werden, bevor sie einer Ansteuereinheit HF zugeführt werden, die die gerasterten Bilddaten zur Ansteuerung eines Leuchtdiodenkammes LED aufbereitet. Dort werden die Daten in Lichtsignale umgesetzt, mit denen eine elektrofotografische Fotoleiterschicht FL zur Erzeugung eines Zwischenbildes belichtet wird. Dieses Zwischenbild wird anschließend nach dem elektrofotografischen Prinzip mit Toner entwikkelt und das entwickelte Bild in einem Umdruckvorgang auf einen Aufzeichnungsträger (z.B. Papier) übertragen. Der SRA-Controller ist bei diesem Ausführungsbeispiel über ein und denselben Systembus mit der Gerätesteuerung GS bzw. mit den Aggregatesteuerungen DMC verbunden. Zur Erhöhung der Datentransferrate kann es jedoch vorteilhaft sein, statt dessen einen ersten Systembus für die Übertragung der Druckdaten vorzusehen und einen davon getrennten, zweiten Systembus für die Gerätesteuerungseinheiten (siehe Figur 1).

Der zentrale Steuerungscomputer PC innerhalb des SRA-Controllers weist einen ersten Netzwerkanschluß LAN 1 auf, der ihn mit dem Systembus verbindet. Zudem weist er einen zweiten Netzwerkanschluß LAN 2 auf, der zum Anschluß des Wartungscomputers vorgesehen ist. Der zentrale Steuerungscomputer PC innerhalb des Rasterprozess-Computers SRA weist des weiteren ein an sich bekanntes Basis-Eingangs/Ausgangs-System BIOS auf, das beim Einschalten des Controllers die ersten Steuerungsbefehle an den SRA-Controller gibt, um diesen zu Booten. Erst dann wird über den Mikroprozessor MP das Laden von Betriebssystem-Dateien wie beispielsweise Windows 98, Windows NT, Unix oder Linux in den Arbeitsspeicher RAM des PC's gesteuert. In einer Standard-Einstellung prüft das BIOS dazu zunächst, ob auf der Festplatte HDD Betriebssystemdateien enthalten sind. Wenn an der Festplattenschnittstelle des PC keine solchen Daten vorhanden sind, werden nachfolgend die Schnittstellen des Diskettenlaufwerks FD und des CD-ROM Laufwerks CD auf Betriebssystemdaten geprüft.

Mittels eines mechanischen Schalters BSW kann die Schnittstellen-Abfragereihenfolge des BIOS verändert werden. Dazu ist vorgesehen, den Schalter für einen Service-Einsatz derart umzulegen, daß zuerst das Floppy-Laufwerk FD, dann das CD-Laufwerk CD, dann der lokale Netzwerkanschluß LAN 2 und erst zuletzt die Festplatte HDD hinsichtlich Betriebssystemdaten überprüft wird. Je nach auszutauschender Komponente kann auch vorgesehen sein, die Prüfung für den Wartungsdatenanschluß LAN 2 in der Abprüfungsreihenfolge noch weiter nach vorne zu legen, nämlich vor das CD-ROM Laufwerk CD und/oder vor das Floppy-Laufwerk FD oder etwaiger, weiterhin vorhandener zusätzlicher Anschlüsse wie SCSI (small computer system interface) oder IDE (integrated drive electronics) Speicherplattenanschlüsse vorgesehen sein.

Weitere Einzelheiten, Funktionen und Wirkungen der in Figur 2 gezeigten Struktur sind dem bereits eingangs genannten US-Patent Nr. 5,012,434 zu entnehmen, insbesondere dessen Figur 1 mit zugehöriger Beschreibung, deren Inhalt hiermit nochmals explizit an dieser Stelle durch Bezugnahme in die vorliegende Beschreibung aufgenommen wird.

In Figur 3 ist der Verfahrensablauf dargestellt, mit dem ein Wartungseinsatz an einem Rasterprozessor-Computer durchgeführt werden kann, bei dem eine Festplatte überprüft, erforderlichenfalls neu partitioniert und formatiert und mit neuen Betriebssystemdateien versehen werden kann und anschließend weitere neue Systemdateien zur Steuerung des Druckgeräts eingespielt werden können.

Im Schritt S1 wird eine Service-Software auf einen Wartungscomputer gestartet. Im Schritt S2 wird der Service-PC in einer Punkt-zu-Punkt-LAN-Verbindung über den Wartungsdatenanschluß mit dem Rasterprozess-Computer SRA verbunden. Im Schritt S3 wird der SRA-Computer eingeschaltet. Während der Einschaltprozedur sendet das BIOS des SRA-Computers im Schritt S4 durch eine Broadcast-Netzwerkmeldung eine Information an seinen Wartungsdatenanschluß. Diese Broadcast-Meldung wird von der im Wartungscomputer gestarteten Software erkannt und über ein DHCP-Modul (dynamic host configuration protocol) im Schritt S5 automatisch eine Netzwerk-IP Adresse für den SRA-Computer zugeordnet. Dem SRA-Computer wird dabei beispielsweise die IP-Adresse 192.168.0.0/ subnetmask 255.255.255.0 temporär zugeordnet (empfohlen nach den Standards RFC Nr. 1918 bzw. RFC Nr. 1597). Die temporäre Zuordnung bleibt während dem Boot-Vorgang so lange erhalten, bis im SRA-Controller das speziell an das Druckgerät angepaßte Betriebssystem gebootet wird und dieses Betriebssystem eine neue IP-Adresse zuweist. Die temporäre IP-Adresse gilt also nur so lange, bis der SRA-Controller abgeschaltet bzw. heruntergefahren wird, insbesondere um das speziell angepaßte Betriebssystem zu booten, nachdem alle dafür benötigten Dateien in den SRA-Controller geladen wurden. Danach wird ein sog. TFTP-Protokoll (trivial file transfer protocol), basierend auf dem TCP/IP-Standard abgearbeitet, wie dies z.B. in dem eingangs erwähnten Dokument RFC Nr. 1350 näher beschrieben ist.

Weitere Einzelheiten der beteiligten Systemkomponenten und der Vorgänge zur Verbindungsaufnahme zwischen den beiden Computern SRA und SNB können z.B. gemäß der eingangs erwähnten Veröffentlichung "Preboot Execution Environment (PXE) Specification" der Intel Corporation, Vers. 2.1 (September 20, 1999 oder jüngeren Datums) und/oder nach dem TFTP-Protokoll gemäß RFC-Dokument Nr. 1350 (Juli 1992 oder jüngeren Datums) ausgebildet sein. Diese Veröffentlichungen werden zu diesem Zweck und an dieser Stelle nochmals ausdrücklich in die vorliegende Beschreibung aufgenommen.

Nach erfolgreichem Abschluß der TFTP-Verbindungsaufnahme meldet sich der SRA-Computer über das TFTP-Protokoll beim Wartungscomputer. SRA-Computer und Wartungscomputer sind dabei wie ein Client-Server-System miteinander gekoppelt, wobei der SRA-Computer die Rolle des Clients und der Wartungscomputer die Rolle des Servers übernimmt. Der Wartungscomputer (Server) überträgt im Schritt S6 gemäß dem TFTP-Protokoll eine sog. Boot Loader-Datei, die innerhalb des SRA-Computers ein virtuelles Laufwerk (RAM Disc) installiert (Schritt S7). Die Boot Loader-Datei wird dann im SRA-Computer durch dessen BIOS gestartet und eine 1,44 MB große RAM-Disk (Random Access Memory Speicher) im SRA-Controller generiert. Im Anschluß daran werden vom Service-Computer SNB im Schritt S8 eine erste minimale Anzahl von Betriebssystem-Dateien an den SRA-Computer übertragen. Ihr Inhalt entspricht dem einer Boot-Diskette, in der alle grundlegenden Betriebssystembefehle enthalten sind, die zum Grundbetrieb des SRA-Computers (d.h. für einen gebooteten Zustand) benötigt werden. Anders gesprochen, wird dabei ein sogenanntes Boot Image nachgezogen, das einer Boot-Diskette (boot floppy) entspricht. Die Boot-Dateien enthalten auch alle Treiber für die Netzanbindung der Controller-Laufwerke (HDD, FD, CD) über den Service-PC SNB. Anschließend wird der Controller-PC SRA mit dem Boot Image von der RAM-Drive automatisch neu gebootet (Schritt S9). Im Client (SRA-Computer) übernimmt dadurch das neu geladene Boot-Image die Kontrolle. Das Boot Image übernimmt demnach folgende Aufgaben bzw. Schritte (mit teilweise dazwischen geschalteten, optionalen und/oder zwingenden Boot-Vorgängen):
- Aufgaben des Boot-Images ( Für jede Aufgabe wird ein neues Boot-Image benötigt)
   - Festplatten Struktur zerstören -> Booten
   - Festplatte partitionieren -> Booten
   - Festplatte (Partitionen) formatieren -> Booten
   - Treiber und Dateien laden um eine Netzwerkverbindung zu erlauben.
   - Installieren der neuen Daten ( Betriebssystem, FC,...) -> Booten
   - Das Ende des letzten Boot-Vorgangs dem Server melden.
- Der Wartungscomputer überträgt die Daten ( Betriebssystem, functional code usw:) auf die Festplatte des Clients
- Das nächste Boot-Image installiert das neue Betriebssystem, den functional code des SRA-Computers usw.
- Der letzte Bootvorgang lädt das neue Betriebssystem oder den functional code.

Zu den entsprechenden Schritten im Einzelnen:Im Schritt S10 wird entschieden, ob die Festplatte HD des SRA-Controllers neu formatiert werden soll. Diese Entscheidung kann beispielsweise in einem Benutzer-Dialog abgefragt werden oder automatisch vorgegeben sein durch ein entsprechendes, im Service-Computer SNB gestartetes Batch-Programm aus dem Batchprogramm-Pool 5. Wenn die Abfrage mit "JA" beantwortet wird bzw. im Batch-Programm ein entsprechender direkter Programmschritt vorgesehen ist, so wird die Festplatte HDD im Schritt S11 zunächst neu partitioniert und dann im Schritt S12 neu formatiert. Etwaige, auf der Festplatte vorhandene Formatierungen und Dateien werden dabei gelöscht.

Diese Schritte können bereits durch Dateien, die im Boot Image enthalten waren und auch der RAM-Disc des SRA-Controllers geladen sind, durchgeführt werden. Im Schritt S13 wird der SRA-Controller erneut gebootet und im Netz unter einem neuen Namen angemeldet. Seine Hard Disc Partitionen werden dabei automatisch einem Laufwerk des Service-PC's SNB zugeordnet.

Im Schritt S14 werden anschließend alle Betriebssystem-Dateien vom Service-Computer SNB in den SRA-Computer geladen.

Zur Installation des Betriebssystems "Windows NT" wird ein selbstentpackendes Installationsprogramm auf die Festplatte HD des Rastercomputers SRA im Basis-Verzeichnis "C:\" übertragen. Gesteuert durch das Installations-Batch Programm werden dann die System-Dateien entpackt und installiert.
Dabei werden auch Daten zur Betriebssystem-Einstellung übertragen.

Anschließend werden im Schritt S15 - der im übrigen direkt aus Schritt S10 heraus ausgeführt wird, wenn die Festplatte nicht neu formatiert werden soll - alle druckerspezfischen Gerätesteuerungsprogramme (functional codes) vom Service-Wartungscomputer SNB in den Rasterprozess-Computer SRA geladen. Auch diese Übertragung ist batchgesteuert, so daß der gesamte Verfahrensablauf voll automatisch mit minimaler Benutzer-Interaktion durchgeführt werden kann.

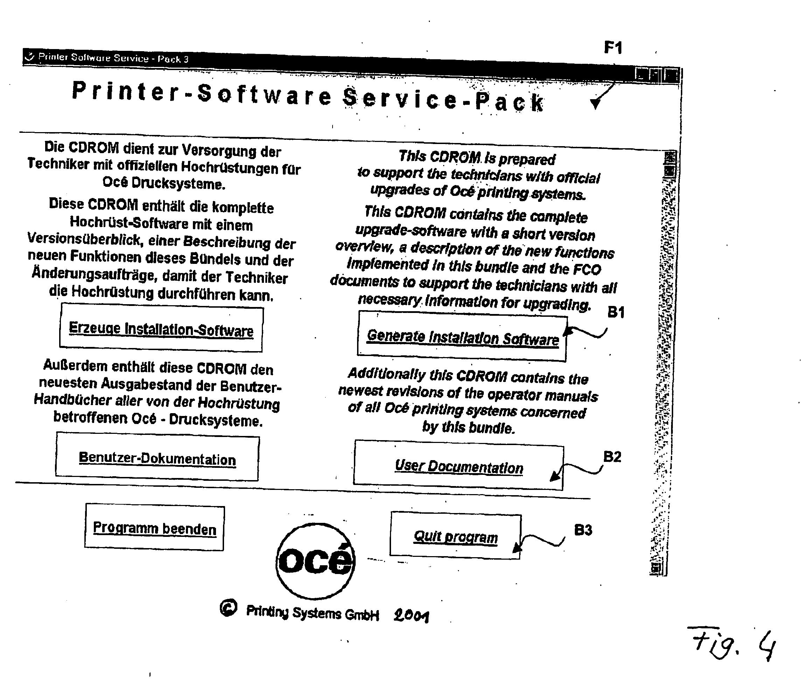

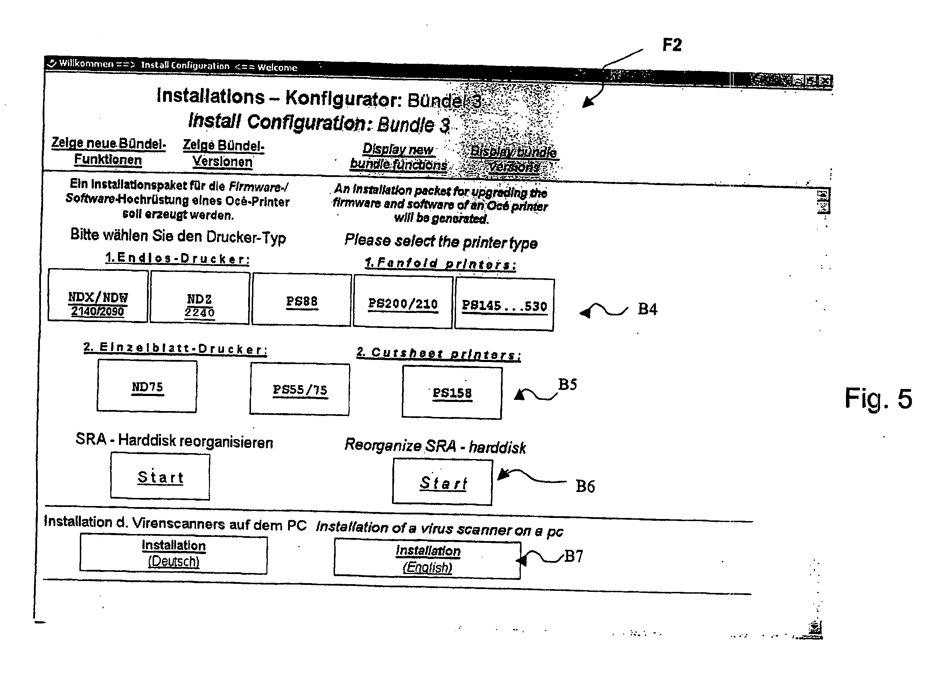

Anhand der Figuren 4 und 5 wird deutlich, wie einfach die Bedienung eines Service-Programms ist, wenn die Steuerung eine Vielzahl komplexer Arbeitsabläufe und Verbindungsaufnahmen vollautomatisch durchführt. In einem Eingangsfenster F1 wird der Benutzer der Service-Software am Service-Computer SNW zu einer Auswahl aufgefordert, einen Installationsvorgang über einen Auswahlknopf B1 zu starten, Benutzerdokumentationen B2 zu laden oder das Programm über Schaltfläche B3 zu beenden. Wenn die Schaltfläche B1 gedrückt wird, erscheint Fenster F2 (Figur 5), in dem verschiedene Druckertypen, beispielsweise Drucker für Endlos-Aufzeichnungsträger über Schaltflächen B4 oder Drucker für Einzelblätter über Schaltflächen B5 auswählbar sind. Durch Aufruf des entsprechenden Druckertyps können typspezifische Aggregate-Steuerungsprogramme in die Druckersteuerung geladen werden.

Mit der Schaltfläche B6 läßt sich die Festplatte des Rasterprozess-Computers SRA reorganisieren, d.h. wahlweise die Speicherorganisation reorganisieren, eine Festplatte tauschen und/oder neue Systemdateien (Betriebssystem und/oder Functional Code) installieren. Bei Auswahl der Schaltfläche B6 ist anschließend eine weitere Angabe/Auswahl gewünschter Konfigurationsoptionen (verarbeitbare Druckdatenströme, Typ des Rasterprozessors, Versionspflege für Software) erforderlich. Danach werden die der Auswahl und Figur 3 entsprechenden Prozesse automatisch und durch Batch-Programme gesteuert.

Mit Schaltfläche B7 läßt sich unabhängig von den anderen Abläufen ein Virenschutzprogramm auf einem angeschlossenen PC installieren.

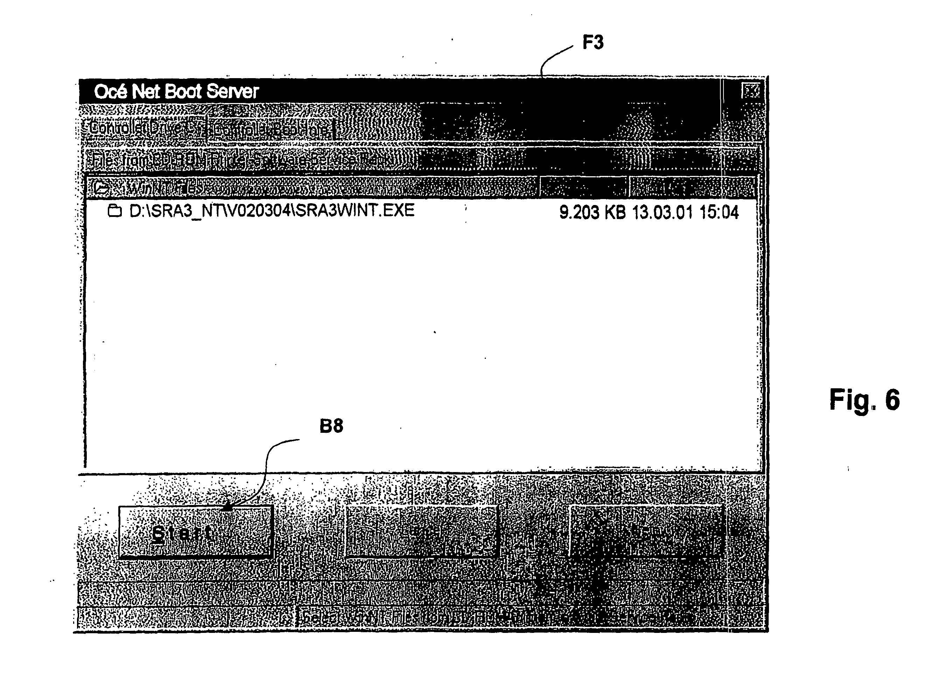

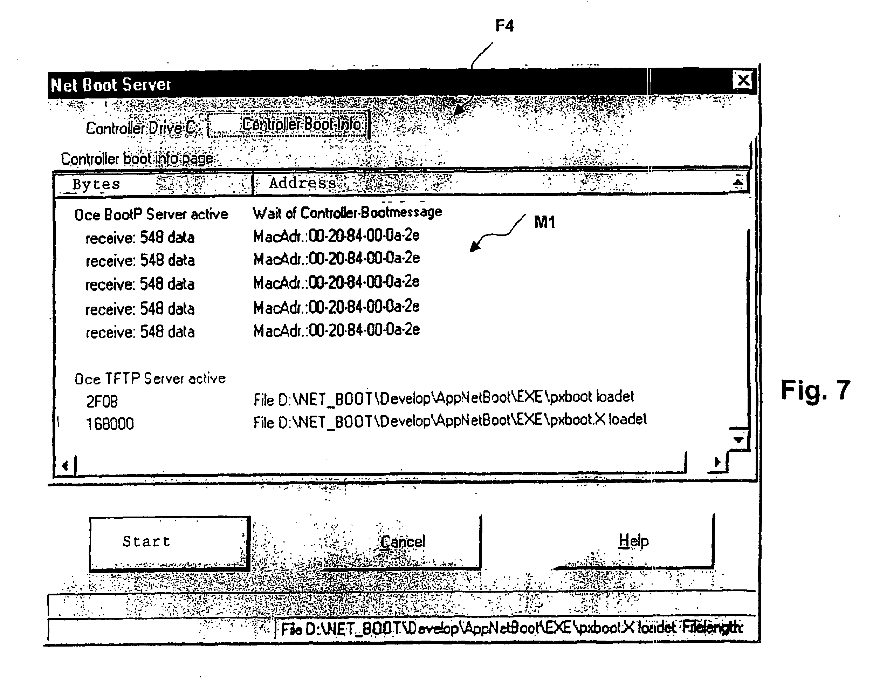

In Figur 6 ist ein Dialogfenster F3 gezeigt, mit dem Pfad- und Dateinamen ausgewählter Installationsdateien angezeigt werden, die nach der Auswahl des Schaltknopfes B6 in Figur 5 zur Anzeige kommen. In Figur 3 entspricht dies noch dem Schritt S1. Durch Aktivieren der Schaltfläche B8 "Start" aus diesem Menü heraus werden einige Sicherheitsabfragen gestartet, um sicherzustellen, daß der Benutzer tatsächlich ein neues Betriebssystem installieren will und damit alle auf der Festplatte des SRA-Computers gespeicherten Daten verloren gehen dürfen. Dann wird der in Figur 3 mit S4 bezeichnete Boot-Vorgang gestartet und es kommt Anzeigefenster F4 der Figur 7 auf dem Service-Computer SNB zur Anzeige. Der Rasterprozess-Computer wird dabei in an sich bekannter Weise gebootet (mit Speichertest-Vorgängen etc.) und anschließend die Punkt-zu-Punkt Verbindung zwischen Service-Computer SNB und Rasterprozess-Computer SRA aufgebaut. Anhand der im Fenster F4 angezeigten Meldungen M1 ist die Verbindungsaufnahme protokolliert und vom Bediener verfolgbar.

Die Erfindung ist insbesondere dazu geeignet, als Computerprogramm (Software) realisiert zu werden. Sie kann damit als Computerprogramm-Modul als Datei auf einem Datenträger wie einer Diskette oder CD-ROM oder als Datei über ein Daten- bzw. Kommunikationsnetz verbreitet werden. Derartige und vergleichbare Computerprogramm-Produkte oder Computerprogramm-Elemente sind Ausgestaltungen der Erfindung. Der erfindungsgemäße Ablauf kann in einem Computer, in einem Druckgerät oder in einem Drucksystem mit vorgeschalteten oder nachgeschalteten Datenverarbeitungsgeräten Anwendung finden. Dabei ist klar, daß entsprechende Computer, auf denen die Erfindung angewandt wird, weitere, an sich bekannte technische Einrichtungen wie Eingabemittel (Tastatur, Mouse, Touchscreen), einen Mikroprozessor, einen Daten- bzw. Steuerungsbus, eine Anzeigeeinrichtung (Monitor, Display) sowie einen Arbeitsspeicher, einen Festplattenspeicher und eine Netzwerkkarte enthalten können.

## Patentansprüche

1. Verfahren zur Wartung eines Druck- oder Kopiersystems, das mindestens zwei Systemcomputer (BE, GS, SRA) aufweist, nämlich einen zentralen Gerätesteuerungscomputer (GS), der eine Vielzahl von Aggregaten (AG1, AG2, AG3) ansteuert, und einen mit dem Gerätesteuerungscomputer (GS) verbundenen Rasterprozess-Computer (SRA), der einen Druckdaten-Netzwerkanschluß (1, LAN 1, SCSI, S/370) für eingehende, zu rasternde Druck- oder Kopierdaten enthält, wobei mindestens einer der Systemcomputer (BE, GS, SRA) als Serviceverbindungs-Computer ausgebildet ist, der einen Wartungsdaten-Anschluß (LAN 2) aufweist, mit folgenden Schritten:
- an den Wartungsdatenanschluß (LAN 2) wird ein Wartungscomputer (SNB) angeschlossen,
- der Serviceverbindungs-Computer (SRA) wird eingeschaltet,
- zwischen dem Serviceverbindungs-Computer (SRA) und dem Wartungscomputer (SNB) wird automatisch eine Netzwerkverbindung aufgebaut,
- Steuerungsprogramme werden vom Wartungscomputer (SNB) über die Netzwerkverbindung (LAN 2) automatisch in den Serviceverbindungs-Computer (SRA) geladen.

2. Verfahren nach Anspruch 1, wobei
- durch ein Basis-Eingangs/Ausgangs-System (BIOS) beim Einschalten des Service-Verbindungscomputers (SRA) verschiedene angeschlossene Schnittstellen (HDD, FD, LAN1, LAN 2) der Reihe nach auf das Vorliegen von Betriebssystemdaten abgeprüft und vorliegende Betriebsysstemdaten in den Service-Verbindungscomputer (SRA) geladen werden und
- wobei die Überprüfung für den Netzwerk-Anschluss (LAN 2) vor Überprüfung eines Festplatten-Anschlusses (HDD) erfolgt.

3. Verfahren nach Anspruch 2, wobei die Überprüfungsreihenfolge für die Anschlüsse (FD, HDD, LAN1, LAN 2) mit einem am Service-Verbindungscomputer (SRA) vorgesehenen, mechanischen, elektronischen und/oder softwaregesteuerten Schalter (BSW) ausgewählt wird.

4. Verfahren nach einem der vorhergehenden Ansprüche, wobei der Rasterprozess-Computer (SRA) der Service-Verbindungscomputer ist.

5. Verfahren nach einem der vorhergehenden Ansprüche, wobei mit dem Wartungscomputer (SNB) automatisch überprüft wird, ob sich ein vorgegebenes Bauteil (HDD) in einem vorgegebenen Zustand befindet.

6. Verfahren nach Anspruch 5, wobei je nach Überprüfungsergebnis der Rasterprozess-Computer (SRA) das Bauteil (HDD) und/oder Steuerungsprogramme für das Bauteil (HDD) mit vorgegebenen, im Wartungscomputer (SNB) verfügbaren Computerstandard-Steuerungsprogrammen (5) neu eingerichtet wird.

7. Verfahren nach Anspruch 6, wobei das Bauteil eine Festplatte (HDD) ist und wobei überprüft wird, ob die Festplatte (HDD) formatiert ist.

8. Verfahren nach Anspruch 7, wobei die Festplatte (HDD) neu formatiert und/oder neu partitioniert wird.

9. Verfahren nach einem der vorhergehenden Ansprüche, wobei als Wartungs-Computer (SNB) ein mobiler Computer verwendet wird.

10. Verfahren nach einem der vorhergehenden Ansprüche, wobei die zwischen Wartungs-Computer (SNB) und Service-Verbindungscomputer (SRA) aufgebaute Netzwerkverbindung als Punkt-zu Punkt-Verbindung hergestellt wird.

11. Verfahren nach einem der vorhergehenden Ansprüche, wobei die Verbindung zwischen dem Wartungs-Computer (SNB) und dem Service-Verbindungscomputer (SRA) über eine Datenfernverbindung aufgebaut wird.

12. Verfahren nach Anspruch 11, wobei das Einschalten des Service-Verbindungscomputers (SRA) per Fernsteuerung über die Datenfernverbindung gesteuert wird.

13. Verfahren nach einem der vorhergehenden Ansprüche, wobei die Steuerungsprogramme als Standard-Programme ausgebildet sind.

14. Verfahren nach einem der vorhergehenden Ansprüche, wobei die Steuerungsprogramme spezifische, für das Druckgerät angepaßte, vordefinierte Konfigurationsdaten, enthalten.

15. Verfahren nach einem der vorhergehenden Ansprüche, wobei die Steuerungsprogramme Betriebssystemdaten enthalten, die insbesondere auf einen druckerangepaßten Datenumfang beschränkt sind.

16. Verfahren nach einem der vorhergehenden Ansprüche, wobei die Steuerungsprogrämme drucksystemspezifische Gerätesteurungsprogramme umfassen.

17. Verfahren nach einem der vorhergehenden Ansprüche, wobei die Systemcomputer (BE, GS, SRA) über mindestens eine Gerätesteuerungsleitung (BS2) miteinander verbunden sind.

18. Verfahren nach einem der vorhergehenden Ansprüche, wobei im Druck- oder Kopiersystem zusätzlich ein Bedienfeldcomputer (BE) vorgesehen ist.

19. Verfahren nach einem der vorhergehenden Ansprüche, wobei zum Einschalten des Druck- oder Kopiersystems die Systemcomputer (BE, GS, SRA) in einer vorgegebenen Reihenfolge eingeschalten werden und ein nachfolgender Systemcomputer erst eingeschaltet wird, wenn sich ein zuvor eingeschalteter Systemcomputer in einem vorgegebenen Einschalt-Zustand befindet.

20. Verfahren nach einem der vorhergehenden Ansprüche, wobei die Systemcomputer alle innerhalb eines gemeinsamen Gehäuses des Druck- oder Kopiersystems untergebracht sind.

21. Wartungscomputer zur Wartung eines Druck- oder Kopiersystems, das mindestens zwei Systemcomputer (BE, GS, SRA) aufweist, nämlich einen zentralen Gerätesteuerungscomputer (GS), der eine Vielzahl von Aggregaten (AG1, AG2, AG3) ansteuert, und einen mit dem Gerätesteuerungscomputer (GS) verbundenen Rasterprozess-Computer (SRA), der einen Druckdaten-Netzwerkanschluß (1, LAN 1, SCSI, S/370 ) für eingehende, zu rasternde Druck- oder Kopierdaten enthält, wobei mindestens einer der Systemcomputer (BE, GS, SRA) als Serviceverbindungs-Computer ausgebildet ist, der einen Wartungsdaten-Anschluß (LAN 2) aufweist, wobei
- der Wartungscomputer (SNB) Mittel aufweist, die nach einem Anschließen an den Wartungsdatenanschluß (LAN 2) und dem Einschalten des Serviceverbindungs-Computers (SRA) zu dem Serviceverbindungs-Computer (SRA) eine Netzwerkverbindung aufbauen und
- über die Netzwerkverbindung (LAN 2) Steuerungsprogramme in den Serviceverbindungs-Computer (SRA) laden.

22. Wartungscomputer nach Anspruch 21, der als mobiler Computer ausgebildet ist.

23. Computerprogrammprodukt zur Wartung eines Druck- oder Kopiersystems, das mindestens zwei Systemcomputer (BE, GS, SRA) aufweist, nämlich einen zentralen Gerätesteuerungscomputer (GS), der eine Vielzahl von Aggregaten (AG1, AG2, AG3) ansteuert, und einen mit dem Gerätesteuerungscomputer (GS) verbundenen Rasterprozess-Computer (SRA), der einen Druckdaten-Netzwerkanschluß (1, LAN 1, SCSI, S/370 ) für eingehende, zu rasternde Druck- oder Kopierdaten enthält, wobei mindestens einer der Systemcomputer (BE, GS, SRA) als Serviceverbindungs-Computer ausgebildet ist, der einen Wartungsdaten-Anschluß (LAN 2) aufweist,
wobei das Computerprogrammprodukt nach dem Anschluß eines Wartungscomputers (SNB) an den Wartungsdatenanschluß (LAN 2) und dem Einschlaten des Serviceverbindungs-Computers bewirkt,
- dass zwischen dem Serviceverbindungs-Computer (SRA) und dem Wartungscomputer (SNB) eine Netzwerkverbindung aufgebaut wird,
- und dass Steuerungsprogramme vom Wartungscomputer (SNB) über die Netzwerkverbindung (LAN 2) in den Serviceverbindungs-Computer (SRA) geladen werden.

24. Druck- oder Kopiersystem, das einen Wartungscomputer (SNB) oder ein Computerprogrammprodukt nach einem der Ansprüche 21 bis 23 umfaßt.

## Claims

1. Method for the maintenance of a printing or copying system that comprises at least two system computers (BE, GS, SRA), namely a central device control computer (GS) that activates a plurality of aggregates (AG1, AG2, AG3), and a raster process computer (SRA), connected with the device control computer (GS), that comprises a print data network connection (1, LAN 1, SCSI, S/370) for incoming print data or copy data to be rastered, wherein at least one of the system computers (BE, GS, SRA) is fashioned as a service connection computer that comprises a maintenance data connection (LAN 2), with the following steps:
- a maintenance computer (SNB) is connected to the maintenance data connection (LAN 2),
- the service connection computer (SRA) is turned on,
- a network connection is automatically established between the service connection computer (SRA) and the maintenance computer (SNB),
control programs are loaded from the maintenance computer (SNB) onto the service connection computer (SRA) via the network connection (LAN 2).

2. Method according to claim 1, wherein
- via a basic input/output system (BIOS), upon turning on the service connection computer (SRA) various connected interfaces (HDD, FD, LAN1, LAN 2) are checked in turn for the presence of operating system data, and existing operating system data are loaded onto the service connection computer (SRA), and
- wherein the test for the network connection (LAN 2) takes place before testing of a hard drive connection (HDD).

3. Method according to claim 2, wherein the testing sequence for the connections (FD, HDD, LAN1, LAN 2) is selected with a mechanical, electronic and/or software-controlled switch (BSW) provided at the service connection computer (SRA).

4. Method according to any of the preceding claims, wherein the raster process computer (SRA) is the service connection computer.

5. Method according to any of the preceding claims, wherein it is automatically tested with the maintenance computer (SNB) whether a predetermined component (HDD) resides in a predetermined state.

6. Method according to claim 5, wherein depending on the test result of the raster process computer (SRA) the component (HDD) and/or control programs for the component (HDD) is newly set up with predetermined computer standard control programs (5) that are available on the maintenance computer (SNB).

7. Method according to claim 6, wherein the component is a hard disk (HDD) and wherein it is tested whether the hard disk (HDD) is formatted.

8. Method according to claim 7, wherein the hard disk (HDD) is newly formatted and/or newly partitioned.

9. Method according to any of the preceding claims, wherein a mobile computer is used as a maintenance computer (SNB).

10. Method according to one of the preceding claims, wherein the network connection established between the maintenance computer (SNB) and the service connection computer (SRA) is formed as a point-to-point connection.

11. Method according to any of the preceding claims, wherein the connection between the maintenance computer (SNB) and the service connection computer (SRA) is formed via a remote data connection.

12. Method according to claim 11, wherein turning on the service connection computer (SRA) per remote control is controlled via the remote data connection.

13. Method according to any of the preceding claims, wherein the control programs are fashioned as standard programs.

14. Method according to any of the preceding claims, wherein the control programs comprise specific, predefined configuration data adapted for the printing device.

15. Method according to any of the preceding claims, wherein the control programs comprise operating system data that are in particular limited to a data size fitting a printer.

16. Method according to any of the preceding claims, wherein the control programs comprise print system-specific device control programs.

17. Method according to any of the preceding claims, wherein the system computers (BE, GS, SRA) are connected with one another via at least one device control line (BS2).

18. Method according to any of the preceding claims, wherein in the printing or copying system a control panel computer (BE) is additionally provided.

19. Method according to any of the preceding claims, wherein to turn on the printing or copying system, the system computers (BE, GS, SRA) are turned on in a predetermined sequence, and a subsequent system computer is only turned on when a previously activated system computer resides in a predetermined active state.

20. Method according to any of the preceding claims, wherein the system computers are all situated within a common housing of the printing or copying system.

21. Maintenance computer for the maintenance of a printing or copying system, that comprises at least two system computers (BE, GS, SRA), namely a central device control computer (GS) that activates a plurality of aggregates (AG1, AG2, AG3) and a raster process computer (SRA) connected with the device control computer (GS), that comprises a print data network connection (1, LAN 1, SCSI, S/370) for incoming print data or copy data to be rastered, wherein at least one of the system computers (BE, GS, SRA) is fashioned as a service connection computer that comprises a maintenance data connection (LAN 2), wherein
- the maintenance computer (SNB) has means which after a connection to the maintenance data connection (LAN 2) and the turning on of the service connection computer (SRA) establish a network connection to the service connection computer (SRA), and
- load control programs onto the service connection computer (SRA) via the network connection (LAN 2).

22. Maintenance computer according to claim 21, that is fashioned as a mobile computer.

23. Computer program product for the maintenance of a printing or copying system, that comprises at least two system computers (BE, GS, SRA), namely a central device control computer (GS) that activates a plurality of aggregates (AG1, AG2, AG3) and a raster process computer (SRA) connected with the device control computer (GS), that comprises a print data network connection (1, LAN 1, SCSI, S/370) for incoming print or copy data to be rastered, wherein at least one of the system computers (BE, GS, SRA) is fashioned as a service connection computer that comprises a maintenance data connection (LAN 2),
wherein the computer program product, after the connection of a maintenance computer (SNB) to the maintenance data connection (LAN 2) and the turning on of the service connection computer (SRA), causes
- that a network connection is established between the service connection computer (SRA) and the maintenance computer (SNB),
- and that control programs are loaded from the maintenance computer (SNB) onto the service connection computer (SRA) via the network connection (LAN 2).

24. Printing or copying system that comprises a maintenance computer (SNB) or a computer program product according to one of the claims 21 to 23.

## Revendications

1. Procédé de maintenance d'un système d'imprimantes ou de photocopieurs, qui présente au moins deux ordinateurs système (BE, GS, SRA), à savoir un ordinateur pilote de périphériques central (GS), qui pilote une pluralité d'agrégats (AG1, AG2, AG3), et un ordinateur de processus d'analyse (SRA) relié à l'ordinateur pilote de périphériques (GS), qui contient une connexion réseau de données d'impression (1, LAN 1, SCSI, S/370) pour des données d'impression ou de photocopie entrantes à analyser, moyennant quoi au moins l'un des ordinateurs système (BE, GS, SRA) est configuré sous la forme d'un ordinateur passerelle de services, qui présente une connexion de données de maintenance (LAN 2), comportant les étapes suivantes :
- sur la connexion de données de maintenance (LAN 2) est connecté un ordinateur de maintenance (SNB),
- l'ordinateur passerelle de services (SRA) est mis sous tension,
- entre l'ordinateur passerelle de services (SRA) et l'ordinateur de maintenance (SNB) est automatiquement établie une connexion réseau,
- des programmes pilotes sont chargés automatiquement à partir de l'ordinateur de maintenance (SNB), par l'intermédiaire de la connexion réseau (LAN 2), dans l'ordinateur passerelle de services (SRA).

2. Procédé selon la revendication 1, dans lequel
- par l'intermédiaire d'un système d'entrée/sortie de base (BIOS), lors de la mise sous tension de l'ordinateur passerelle de services (SRA), différentes interfaces connectées (HDD, FD, LAN1, LAN 2) de la série sont vérifiées quant à l'existence de données de système d'exploitation, et des données de système d'exploitation existantes sont chargées dans l'ordinateur passerelle de services (SRA), et
- la vérification de la connexion réseau (LAN 2) est réalisée avant la vérification d'une connexion de disque dur (HDD).

3. Procédé selon la revendication 2, dans lequel l'ordre des vérifications pour les connexions (FD, HDD, LAN1, LAN 2) est choisi avec un commutateur (BSW) mécanique, électronique et/ou piloté par un logiciel, prévu sur l'ordinateur passerelle de services (SRA).

4. Procédé selon l'une quelconque des revendications précédentes, dans lequel l'ordinateur de processus d'analyse (SRA) est l'ordinateur passerelle de services.

5. Procédé selon l'une quelconque des revendications précédentes, dans lequel l'ordinateur de maintenance (SNB) vérifie automatiquement si un composant (HDD) prédéfini se trouve dans un état prédéfini.

6. Procédé selon la revendication 5, dans lequel, en fonction des résultats de vérification de l'ordinateur de processus d'analyse (SRA), le composant (HDD) et/ou des programmes pilotes pour le composant (HDD) sont reconfigurés avec des programmes pilotes standard d'ordinateur (5) prédéfinis, disponibles dans l'ordinateur de maintenance (SNB).

7. Procédé selon la revendication 6, dans lequel le composant est un disque dur (HDD), et dans lequel on vérifie si le disque dur (HDD) est formaté.

8. Procédé selon la revendication 7, dans lequel le disque dur (HDD) fait l'objet d'un nouveau formatage et/ou d'un nouveau partitionnement.

9. Procédé selon l'une quelconque des revendications précédentes, dans lequel, comme ordinateur de maintenance (SNB), on utilise un ordinateur portable.

10. Procédé selon l'une quelconque des revendications précédentes, dans lequel la connexion réseau établie entre l'ordinateur de maintenance (SNB) et l'ordinateur passerelle de services (SRA) est construite sous la forme d'une liaison point à point.

11. Procédé selon l'une quelconque des revendications précédentes, dans lequel la liaison entre l'ordinateur de maintenance (SNB) et l'ordinateur passerelle de services (SRA) est établie par l'intermédiaire d'une télécommunication de données.

12. Procédé selon la revendication 11, dans lequel la mise sous tension de l'ordinateur passerelle de services (SRA) est pilotée par pilotage à distance par l'intermédiaire de la télécommunication de données.

13. Procédé selon l'une quelconque des revendications précédentes, dans lequel les programmes pilotes sont configurés sous la forme de programmes standard.

14. Procédé selon l'une quelconque des revendications précédentes, dans lequel les programmes pilotes contiennent des données de configuration spécifiques prédéfinies, adaptées à l'imprimante.

15. Procédé selon l'une quelconque des revendications précédentes, dans lequel les programmes pilotes contiennent des données de système d'exploitation, qui sont en particulier limitées à une plage de données adaptée à l'imprimante.

16. Procédé selon l'une quelconque des revendications précédentes, dans lequel les programmes pilotes comportent des programmes pilotes de périphériques spécifiques au système d'imprimante.

17. Procédé selon l'une quelconque des revendications précédentes, dans lequel les ordinateurs système (BE, GS, SRA) sont reliés les uns aux autres par l'intermédiaire d'au moins un circuit pilote de périphériques (BS2).

18. Procédé selon l'une quelconque des revendications précédentes, dans lequel, dans le système d'imprimante ou de photocopieur, il est en outre prévu un ordinateur de panneau de commande (BE).

19. Procédé selon l'une quelconque des revendications précédentes, dans lequel, pour mettre sous tension le système d'imprimante ou de photocopieur, les ordinateurs système (BE, GS, SRA) sont mis sous tension dans un ordre prédéfini, et un ordinateur système suivant est seulement mis sous tension, lorsqu'un ordinateur système mis sous tension auparavant se trouve dans un état de mise sous tension prédéfini.

20. Procédé selon l'une quelconque des revendications précédentes, dans lequel les ordinateurs système sont tous logés à l'intérieur d'un boîtier commun du système d'imprimante ou de photocopieur.

21. Ordinateur de maintenance permettant la maintenance d'un système d'imprimante ou de photocopieur, qui présente au moins deux ordinateurs système (BE, GS, RSA), à savoir un ordinateur pilote de périphériques central (GS), qui pilote une pluralité d'agrégats (AG1, AG2, AG3), et un ordinateur de processus d'analyse (SRA) relié à l'ordinateur pilote de périphériques (GS), qui contient une connexion réseau de données d'impression (1, LAN 1, SCSI, S/370), pour des données d'impression ou de photocopie entrantes à analyser, moyennant quoi au moins l'un des ordinateurs système (BE, GS, SRA) est configuré sous la forme d'un ordinateur passerelle de services, qui présente une connexion de données de maintenance (LAN 2), dans lequel :
- l'ordinateur de maintenance (SNB) présente des moyens qui établissent une connexion réseau avec l'ordinateur passerelle de services (SRA) après une liaison avec la connexion de données de maintenance (LAN 2) et la mise sous tension de l'ordinateur passerelle de services (SRA), et
- qui chargent des programmes pilotes dans l'ordinateur passerelle de services (SRA) par l'intermédiaire de la connexion réseau (LAN 2).

22. Ordinateur de maintenance selon la revendication 21, qui est configuré sous la forme d'un ordinateur portable.

23. Produit de programme informatique pour la maintenance d'un système d'imprimante ou de photocopieur, qui présente au moins deux ordinateurs système (BE, GS, SRA), à savoir un ordinateur pilote de périphériques central (GS), qui pilote une pluralité d'agrégats (AG1, AG2, AG3), et un ordinateur de processus d'analyse (SRA) relié à l'ordinateur pilote de périphériques (GS), qui contient une connexion réseau de données d'impression (1, LAN 1, SCSI, S/370) pour des données d'impression et de photocopie entrantes à analyser, moyennant quoi au moins l'un des ordinateurs système (BE, GS, SRA) est configuré sous la forme d'un ordinateur passerelle de services, qui présente une connexion de données de maintenance (LAN 2),
dans lequel le produit de programme informatique fait en sorte que, après la connexion d'un ordinateur de maintenance (SNB) à la connexion de données de maintenance (LAN 2) et la mise sous tension de l'ordinateur passerelle de services,
- une connexion réseau soit établie entre l'ordinateur passerelle de services (SRA) et l'ordinateur de maintenance (SNB),
- et des programmes pilotes soient chargés dans l'ordinateur passerelle de services (SRA) à partir de l'ordinateur de maintenance (SNB) par l'intermédiaire de la connexion réseau (LAN 2).

24. Système d'imprimante ou de photocopieur, qui comprend un ordinateur de maintenance (SNB) ou un produit de programme informatique selon l'une quelconque des revendications 21 à 23.
